# EUROPÄISCHE PATENTANMELDUNG

(11) **EP 4 495 444 A1**
(43) Veröffentlichungstag der Anmeldung: **22.01.2025**
(21) Anmeldenummer: 24188846.0
(22) Anmeldetag: 16.07.2024
(51) Int. Cl.: F16C 17/03, F03D 80/70, F16C 23/04, F16C 25/04, F16C 33/20, F16C 35/02

(54) **PROFILIERTES GLEITSEGMENT**

(30) Priorität: 18.07.2023 DE 102023118943
(71) Anmelder: COB Bearings GmbH, 4693 Desselbrunn (AT)
(72) Erfinder: Prölß, Maximilian, 14169 Berlin (DE); Decker, Peter, 30177 Hannover (DE)
(74) Vertreter: Horak, Michael

(57) **Zusammenfassung**

Die vorliegende Erfindung betrifft ein verbessertes Gleitsegment mit profilierter Gleitfläche sowie ein entsprechendes Radialgleitlager sowie deren Anwendungen in Hauptrotorlagern und Windkraftanlagen.

## Beschreibung

### Kurzdarstellung der Erfindung

Die vorliegende Erfindung betrifft ein verbessertes Gleitsegment mit profilierter Gleitfläche sowie ein entsprechendes Radialgleitlager sowie deren Anwendungen in Hauptrotorlagern und Windkraftanlagen.

Hauptrotorlagerungen von Windkraftanlagen werden immer häufiger als Gleitlagerungen konzipiert. Den meisten bekannten Designs ist gemeinsam, dass es sich um segmentierte Radiallagerungen handelt.

In der WO 2011/003482 A2 wird beispielsweise ein solches segmentiertes Radialgleitlager als Hauptlagerung einer Windkraftanlage beschrieben. Als Vorteil dieser Lagerart wird hervorgehoben, dass diese Art von Lagerung segmentweise getauscht werden kann.

In EP 3 464 896 B1 wird ein kombiniertes Radial-Axiallager als Hauptlagerung einer Windkraftanlage beschrieben bei welchem die Rotornabe und der Generatorläufer eine gemeinsame Hauptlagerung aufweisen, die in zwei voneinander in Richtung der Achse beabstandete Lagerabschnitte unterteilt ist, wobei der erste Lagerabschnitt ein erstes Radialgleitlager und ein erstes Axialgleitlager aufweist, und der zweite Lagerabschnitt ein zweites Radialgleitlager und ein zweites Axialgleitlager aufweist.

Im Zuge der Weiterentwicklung der gleitgelagerten Rotorhauptwellen wurde festgestellt, dass die Beweglichkeit der Gleitsegmente gegenüber Welle und Gehäuse sichergestellt werden muss, da es sonst zu Kantenträgern und vorzeitigem Lagerverschleiß kommt.

Eine Möglichkeit der Segmentabstützung zum Lagergehäuse wird in EP 3577356 B1 beschrieben. Hierbei wird das Lagersegment über ein Kugelgelenk mit einer Stützstruktur (Kugel-Kalotten-Konstruktion) gegen das Lagergehäuse abgestützt, um sich den Verformungen von Hauptwelle und Lagergehäuse anpassen zu können.

Die DE 102019131245 A1 beschreibt eine Lageranordnung zum Lagern einer Rotorwelle einer Windkraftanlage, wobei die Lageranordnung ein äußeres Gehäuse und ein Lager mit einer Mehrzahl von Gleitlagersegmenten aufweist, wobei das Lager zwei ringförmige Stützkörper mit jeweils einer sphärischen Aufnahmefläche aufweist, die an dem äußeren Gehäuse angeordnet sind und die Gleitlagersegmente mit einer sphärischen Anlagefläche an den Aufnahmeflächen anliegen. Folglich kann sich die komplette Lagereinheit in der Lageraufnahme bewegen um so eine Verformung der Rotorwelle zu kompensieren. Ein ähnliches Konstruktionsprinzip wird auch in der US 8075190 B1 beschrieben.

Allen bekannten Konstruktionen ist gemeinsam, dass sie sich darauf beschränken, die globalen Verformungen der Lagerung, der Welle und der Lagerungsumgebung zu kompensieren.

Zwischen der Gleitfläche der Welle und den Lagersegmenten kommt es durch den hydrodynamischen Druck jedoch auch zu einer Verformung in der Kontaktfläche der Welle und des Segments. Ein solcher Effekt kann allerdings nicht durch die bekannten Konstruktionen kompensiert werden.

Die Aufgabe der vorliegenden Erfindung ist daher eine Gleitlagerung zur Verfügung zu stellen, bei welcher eine Verformung zwischen der Gleitfläche der Welle und den Lagersegmenten aufgrund des hydrodynamischen Drucks verringert, kompensiert bzw. verhindert wird.

Die vorliegende Erfindung betrifft daher ein Gleitsegment, welches mit einem Lagergehäuse verbunden werden kann, wobei das Gleitsegment auf der zur Welle gerichteten Seite eine Gleitschicht aufweist die eine Gleitfläche bildet, welche mit der Gleitfläche der Welle interagiert, wobei ferner die Gleitschicht eine Profilierung in Richtung der Achse aufweist. Bei der der Profilierung handelt es sich vorzugsweise um eine einachsig konvex gekrümmte Oberfläche in Richtung der Welle. In einer Ausführungsform ist die Profilierung nur wenige Mikrometer (µm) bis zu wenigen 1/100 mm hoch. In einer bevorzugten Ausführung weist die Profilierung der Gleitschicht des Gleitsegments zur Bildung der Gleitschicht eine Höhe im Bereich von 5 µm bis 200 µm auf.

In einem Aspekt der Erfindung weist die Gleitfläche des Gleitsegments in Rotationsrichtung der Welle einen durch den Wellendurchmesser vorgegebenen Segmentdurchmesser auf.

Die Gleitschicht des Gleitsegments weist als Gleitmaterial vorzugsweise einen faserverstärkten Kunststoff auf. Besonders bevorzugt umfasst sie als Gleitmaterial ein faserverstärktes Poly-Ether-Ether-Keton.

Das Federelement des Gleitsegments wird in einer Ausführung durch ein Führungselement, das das Federelement umschließt, gehalten, wobei das Führungselement am Gleitsegment und der Trägerstruktur befestigt ist. In einem bevorzugten Aspekt ist zwischen dem Federelement und dem Führungselement ein Spalt angeordnet ist.

Die vorliegende Erfindung betrifft ferner ein Radialgleitlager, welches mehrere zuvor beschriebene Gleitsegmente innerhalb eines Lagergehäuses aufweist, wobei ein jedes Gleitsegment auf einer Seite über eine Trägerstruktur mit dem Lagergehäuse verbunden ist und auf der gegenüberliegenden Seite durch seine Gleitfläche in Kontakt mit der Welle steht. Die Gleitlagersegmente sind hierbei vorzugsweise kreisförmig um die Welle angeordnet. Ihre Anzahl, welche die Welle umgeben, ist vorzugsweise abhängig von ihrer eigenen Größe, sowie der Größe der Welle und/oder deren Durchmesser. Die Gleitlagersegmente sind in einem Aspekt der Erfindung symmetrisch um die Welle angeordnet.

Zur Welle sind die Gleitsegments vorzugsweise derart angeordnet, dass zwischen der Gleitfläche des mindestens einen Gleitsegments und der Gleitfläche der Welle ein Zwischenraum gebildet wird, der die Gleitflächen in einem Abstand zueinander hält. Der Zwischenraum zwischen der Welle und dem Gleitsegment ist in einem Apekt der Erfindung mit einer Schmierflüssigkeit, vorzugsweise Öl, Fett und/oder einem Fluid, gefüllt.

Darüber hinaus betrifft die Erfindung auch die Verwendung der zuvor beschriebenen profilierten Gleitsegmente und Radialgleitlager in Hauptrotorlagern und Windkraftanlagen.

Die vorliegende Erfindung wird durch die Ausführungsformen in den Ansprüchen gekennzeichnet und durch die Ausführungen in der folgenden Beschreibung, den Beispielen und den Zeichnungen näher beschrieben.

### Beschreibung der Zeichnungen

- Fig. 1: Schematische Darstellung einer Hauptrotorwelle mit mehreren Gleitlagern.
- Fig. 2: Schematische Darstellung eines Gleitsegments mit Trägerstruktur, wobei die Richtung der Wellenachse (Pfeil) gekennzeichnet ist (Seitlich).
- Fig. 3: Schematische Darstellung der Verformung der Gleitfläche des Gleitsegments und der Welle bei hydrodynamischen Druckaufbau (Seitlich).
- Fig. 4: Perspektivische schematische Darstellung eines erfindungsgemäßen Gleitsegments mit profilierter Gleitschicht.
- Fig. 5: Perspektivische schematische Darstellung eines erfindungsgemäßen Gleitsegments mit profilierter Gleitschicht.
- Fig. 6: Schematische Darstellung der Auswirkung eines erfindungsgemäßen Gleitsegments mit profilierter Gleitschicht auf den Druckverlauf.

### Detaillierte Beschreibung der Erfindung

Die vorliegende Erfindung betrifft ein verbessertes Gleitsegment (1) mit profilierter Gleitfläche (2) sowie ein entsprechendes Radialgleitlager sowie deren Anwendungen in Hauptrotorlagern und Windkraftanlagen.

Im Folgenden sollten die Artikel "ein" und alle Ableitungen hiervon, wie sie hier verwendet werden, generell als "ein/e/es oder mehrere" verstanden werden, sofern nicht anderweitig angegeben oder aus dem Kontext als Singularform ersichtlich ist.

Sofern die Begriffe "enthält", "hat", "besitzt" und dergleichen in der Beschreibung oder den Ansprüchen verwendet werden, sollen diese Begriffe derart verstanden werden, wie der Begriff "aufweisend" oder "umfassend", d.h. nicht abschließend, außer es ist explizit angegeben.

Der Begriff "Welle" beschreibt ein längliches zylinderförmiges Maschinenelement, das zur Übertragung von Drehbewegungen und Drehmomenten beweglich ausgebildet ist. In einer bevorzugten Ausführung handelt es sich um mindestens eine Welle aus Stahl eines Getriebes einer Windenergieanlage. Bei den Windkraftanlagen handelt es sich hierbei vorzugsweise um Onshore- oder Offshore-Anlagen. Obwohl die hiesige Erfindung im Folgenden in Bezug auf Hauptantriebswellen von Windkraftanlagen beschrieben wird, ist grundsätzlich auch möglich, dass die Gleitlagerung auch in anderen Applikationen Verwendung findet. Diese sind beispielsweise, jedoch nicht beschränkt auf die folgende Auflistung, Hydraulikkolben, Pinolenführungen, Stützlagern, Schneckenzahnstangen, Schrauben, Führungsschienen, Lagerringen und anderen Bauteilen. Folglich werden die Begriffe "Welle" und "Hauptwelle" austauschbar verwendet werden, ohne die Erfindung in irgendeiner Weise einzuschränken, und beziehen sich auf den rotierenden Teil, der vom Hauptlager getragen wird. In der Regel handelt es sich um "Flüssigkeitslager" oder "Fluidlager" bei denen das Lager eine Last auf einer dünnen Schmierflüssigkeit trägt.

Bei der "Gleitlager", "Lager", "Gleitlagerung", "Gleitlager-" und "Lager-" werden im Folgenden austauschbar verwendet und beschreiben mindestens ein Bauteil, das es ermöglicht, gegeneinander bewegliche Bauteile zu führen. Gleitlager werden üblicherweise in größeren Maschinen eingesetzt. Die hiesige Erfindung betrifft insbesondere ein Radialgleitlager, welches mehrere Gleitsegmente (1) innerhalb eines Lagergehäuses (12) aufweist. Ein jedes Gleitsegment (1) ist hierbei auf der einen Seite über eine Trägerstruktur (5) mit dem Lagergehäuse (12) verbunden. Auf der anderen, weist das Gleitsegment (1) eine Gleitfläche (2) auf, welche in Kontakt mit der Welle (10) steht. Ein jedes Gleitsegment (1) ist an der Trägerstruktur (5) vorzugsweise beweglich und flexibel angebracht, wodurch sie auch gegenüber dem Lagerring einigermaßen anpassungsfähig gegenüber Toleranzen und/oder Verformungen aufgrund betriebsbedingter Änderungen im Gleitlager sind.

Eine bevorzugte Ausbildung der Gleitlagerung umfasst mehrere Geleitsegmente (1), die am Umfang einer Welle (10) verteilt angeordnet sind. Ein jedes Gleitsegment (1) ist hierbei derart angeordnet, dass seine Gleitfläche (2) an der Welle (10) anliegt. Auf der Rückseite des einen jeden Gleitsegments (1) ist in einem Aspekt der Erfindung ein Federelement (13) zwischen dem Gleitsegment (1) und einer Trägerstruktur (5) angebracht, welches durch ein Führungselement, das das Federelement (13) umschließt gehalten wird, wobei das Führungselement am Gleitsegment (1) und der Trägerstruktur (5) befestigt ist. Hierbei ist die Gleitlagerung vorzugsweise derart ausgeführt, dass zwischen dem Federelement (13) und dem Führungselement ein Spalt angeordnet ist, der eine Beweglichkeit zwischen dem Federelement (13) und dem Führungselement erlaubt.

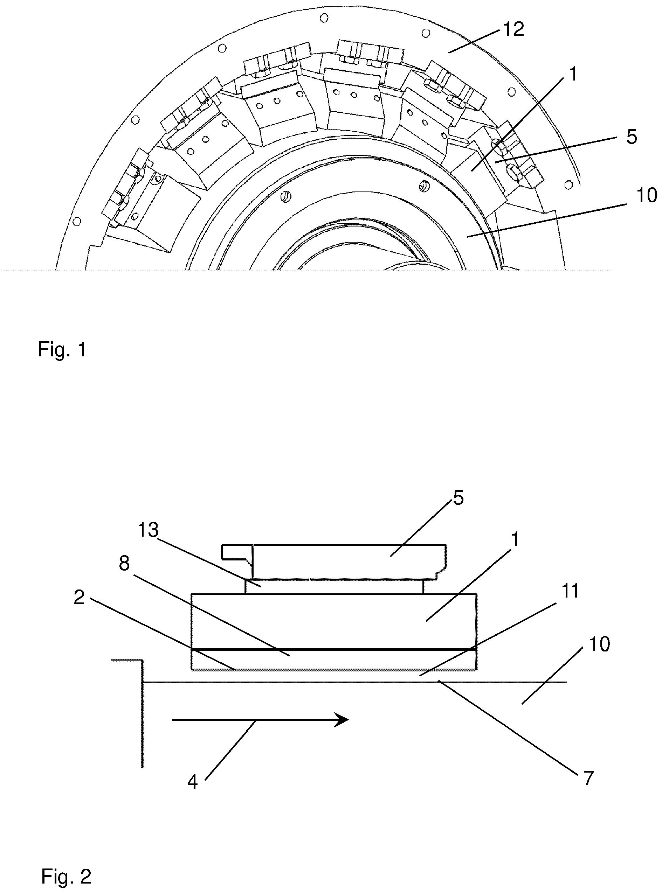

In Fig. 1 ist eine solche bevorzugte Anordnung der Gleitsegmente (1) im Lagergehäuse (12) zu erkennen. Ein jedes Gleitsegment (1) stützt sich hierbei über ein kippbewegliches Federelement (13) auf der Trägerstruktur (5) ab und ist über die Trägerstruktur (5) mit dem Lagergehäuse (12) verbunden. Die Welle (10) gleitet in einer solchen Ausführung mit ihrer Oberfläche auf den Gleitsegmenten (1), wobei die Gleitfläche der Welle (7) mit einer Gleitfläche (2) der Gleitsegmente (1) interagiert. Die in der Fig. 1 dargestellte Lageranordnung bildet hierbei bevorzugt ein Radiallager, in dem das Gleitlager mehrere Gleitlagersegmente (1) aufweist, welche kreisförmig um die Welle (10) angeordnet sind. Die Anzahl der umlaufenden Gleitlagersegmente (1), welche die Welle (10) umgeben, kann abhängig von ihrer eigenen Größe, ihres Durchmessers sowie der Größe der Welle (10) und/oder deren Durchmesser sein. Vorzugsweise umgeben die Gleitlagersegmente (1) die Welle (10) nahezu vollständig, sodass bis auf kleinere Zwischenbereiche, die zwischen den einzelnen Gleitsegmenten (1) entstehen, die Welle (10) vollständig auf den Gleitsegmenten (1) gleiten kann. Die Größe der Gleitlagersegmente (1) ist in der Regel gleichbleibend, sodass eine symmetrische Anordnung Gleitlagersegmente (1) gebildet wird. Jedoch kann in einigen Anwendungen auch vorgesehen sein, dass die Gleitlagersegmente (1), die die Welle (10) umlaufen auch unterschiedlichen Größen aufweisen. Die Ausbildung und Anordnung der Gleitlagersegmente (1) ist insbesondere dazu gerichtet, dass ihre Gleitfläche (2) sich der Oberfläche des abzustützenden Gegenstücks anpasst. Um eine zuverlässige Aufnahme der Welle (10) durch die Gleitlagersegmente (1) zu ermöglichen, weisen diese vorzugsweise eine vollflächige Gleitfläche (2) auf, die in Richtung der Welle zeigt.

Fig. 2 stellt eine bevorzugte Ausführung eines Gleitsegments (1) mit Trägerstruktur (5) dar, das diesen hydrodynamischen Druck zwischen den Komponenten aufnimmt, d.h. den Druck vorzugsweise gleichmäßig verteilt. In der Fig. 2 ist das Gleitsegment (1) mit Trägerstruktur (5) (ohne Lagergehäuse) sowie der skizzierten Welle (10) und ihrer Gleitfläche (17) dargestellt. Die Gleitfläche (2) des Gleitsegments (1) interagiert hierbei mit der Gleitfläche (7) der Welle (10). Wie der Fig. 2 zu entnehmen ist, weist das Gleitsegment (1) auf seiner zur Welle (10) gerichteten Seite eine spezielle Gleitschicht (8) auf. Diese Gleitschicht (8) umfasst ein Gleitmaterial, bei welchem es sich vorzugsweise um einen faserverstärkten Kunststoff handelt. In einem besonders bevorzugten Aspekt der Erfindung handelt es sich bei der Gleitschicht (8) um ein faserverstärktes Poly-Ether-Ether-Keton. Die zur Welle (10) zeigende Seite dieser Gleitschicht (8) bildet die Gleitfläche (2), welche mit der Gleitfläche der Welle (7) zusammenwirkt. Die Richtung der Wellenachse (4) ist durch den Pfeil verdeutlicht. Die beiden Gleitflächen stehen hierbei nicht in unmittelbarem Kontakt miteinander, sondern sind, bedingt durch den sich bei Wellendrehung einstellenden hydrodynamischen Druckaufbau, durch einen Zwischenraum (11) voneinander beabstandet. Der Zwischenraum (11) zwischen der Welle (10) und dem Gleitsegment (1) ist in der Regel mit einer Schmierflüssigkeit, wie beispielsweise Öl, Fett und/oder einem anderen Fluid, gefüllt. Die Versorgung des Zwischenraums (11) mit einem Schmiermittel kann beispielsweise mittels eines externen Reservoirs erfolgen, wobei das Mittel mittels einer Pumpe eingeleitet werden kann (nicht dargestellt). Um eine Schmierung zu erreichen, können ein oder mehrere Hohlräume, Vertiefungen und/oder Ausnehmungen, wie Taschen, beispielsweise an oder zwischen den Gleitsegmenten (1) vorhanden sein. Der mit einem Schmiermittel gefüllte Zwischenraum (11) trennt folglich die Gleitflächen (2) der Gleitsegmente (1) von der Gleitfläche der Welle (7).

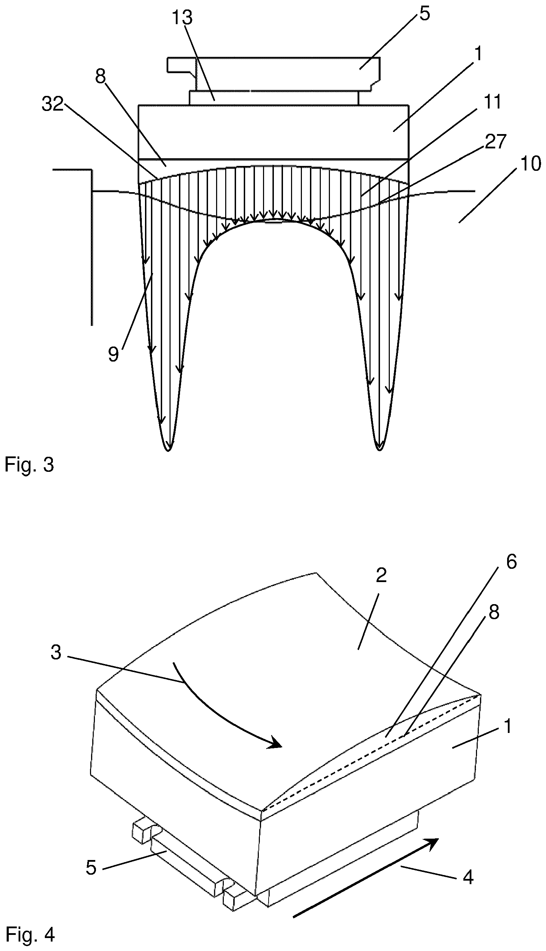

Wie bereits zuvor beschrieben kommt es aufgrund des hydrodynamischen Drucks neben den globalen Verformungen der Lagerung, der Welle (10) und/oder der Lagerungsumgebung zu Verformungen zwischen der Gleitfläche (2) der Welle (10) und den Geleitlagersegmenten (1). Diese sind in der Fig. 3 schematisch dargestellt. Hier wird der hydrodynamische Druckaufbau (9) und die elastische Verformung (32) der Gleitfläche (2) des Gleitsegments (1) und die Verformung (27) der Gleitfläche (27) der Welle (10) gezeigt, wobei durch die elastische Verformung (32) der hydrodynamische Druck (9) an den Lagerrändern sehr hoch und die Schmierspaltweite (11) an den Lagerrändern sehr klein wird. Mischreibung und Verschleiß können nicht ausgeschlossen werden.

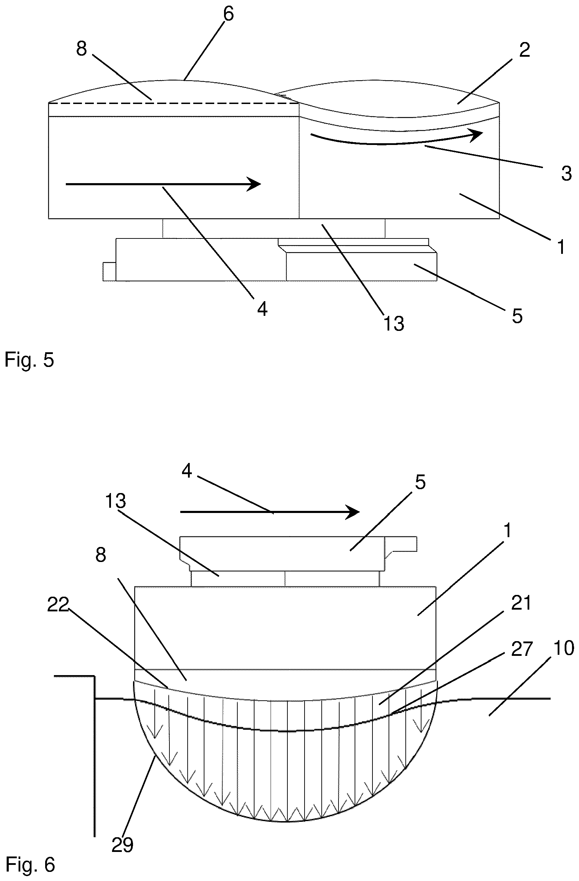

Um den Verformungen zwischen der Gleitfläche (2) der Welle (10) und den Geleitlagersegmenten (1) entgegenzuwirken, d.h. diese zu reduzieren oder zu verhindern wurde ein Gleitlagersegment (1) entwickelt, welches in den Fig. 4 und 5 dargestellt ist. Das erfindungsgemäß modifizierte Radialkippsegment ist hierbei in unterschiedlichen Ansichten abgebildet. Wie in den vorherigen Figuren dargestellt, wird das Gleitsegment (1) über seine Trägerstruktur (5) mit dem Lagergehäuse (12) verbunden (nicht dargestellt). Die Gleitfläche (2) des Gleitsegments (1) weist jedoch anders als bei den üblichen Gleitsegmenten eine Profilierung (6) auf. Der Begriff "Profilierung" beschreibt hierbei die Formgebung und Beschaffenheit der Oberfläche der Gleitfläche (2), insbesondere die Änderung des Durchmessers der Gleitschicht (8) in Achsrichtung (4). In Rotationsrichtung (3) der Welle (10) weist das Gleitsegment (1) den durch den Wellendurchmesser vorgegebenen Segmentdurchmesser. In Richtung der Achse (4) hingegen weist das Gleitsegment (1) eine Profilierung (6) der Gleitschicht (8) auf. Die Profilierung (6) kann unterschiedliche Formgebungen aufweisen, beispielsweise, aber nicht ausschließlich, kann es sich bei der Profilierung vorzugsweise um eine einachsig konvex gekrümmte Oberfläche (plankonvex) in Bezug auf die übliche planare Fläche der Gleitschicht (8) handeln, wie insbesondere der Fig. 5 zu entnehmen ist. Die Profilierung (6) ist hier zur Veranschaulichung stark überhöht dargestellt. In der Realität beträgt die Profilierung (6) nur wenige Mikrometer (µm) bis zu wenigen 1/100 mm. In einem besonders bevorzugten Aspekt der Erfindung liegt die Profilierung (6) der Gleitschicht (8) des Gleitsegments (1) Bereich von 5 µm bis 200 µm.

Untersuchungen zeigten, dass erstaunlicherweise eine solche Profilierung (6) der Gleitschicht (8) zu einem ausgeglichenerem Druckverlauf (29) führt, wie schematisch in der Fig. 6 dargestellt ist. Aufgrund der erfindungsgemäßen profilierten Gleitschicht (8) des Gleitsegments (1) weist die Spaltweite (21) keine Minima an den Lagerrändern mehr auf, da der Druckverlauf (29) wesentlich gleichmäßiger ist als vorher. Ferner ist in der Fig. 6 zu erkennen, dass die profilierte Form der Gleitfläche (22) die Verformung der Lauffläche der Welle (27) aufnimmt und so den Verlauf der Spaltweite (21) über die Lagerbreite (4) vergleichmäßigt, d.h. regelmäßiger gestaltet. Folglich ist die Profilierung (6) derart ausgebildet, dass eine parallel zur Achsrichtung verlaufende Spaltweite (21), d.h. ein Schmierspaltverlauf, ausgebildet wird.

Aufgrund der obigen Erkenntnisse zur Kompensation der Verformung zwischen der Gleitfläche (7) der Welle und dem mindestens einen Gleitsegment (1) durch den hydrodynamischen Druck betrifft die hiesige Erfindung neben den verbesserten Gleitsegmenten (1) und der damit verbundenen Gleitlagerung auch ein Hauptrotorlager, vorzugsweise innerhalb einer Windkraftanlage, sowie die Windkraftanlage selbst.

Das Hauptrotorlager, welches vorzugsweise innerhalb einer Windkraftanlage angeordnet ist, weist hierbei eine Radialgleitlagerung auf, welche vorzugsweise mehrere Gleitsegmente (1) aufweist, welche auf einer Trägerstruktur (5) angeordnet sind und in einem bevorzugten Aspekt der Erfindung über ein kippbewegliches Federelement (13) mit dieser verbunden sind. Durch die Trägerstruktur (5) werden die Gleitsegmente (1) mit dem Lagergehäuse (12) verbunden. Die Gleitsegmente (1) weisen auf der zur Welle (10) gerichteten Seite eine Gleitfläche (2) auf, welche eine Gleitschicht (8) aus einem Gleitmaterial, vorzugsweise einem faserverstärktes Poly-Ether-Ether-Keton, umfasst. Zwischen den Gleitflächen (2, 7) der Welle (10) und des Gleitsegments (1) ist ein Zwischenraum (11) ausgebildet, welcher mit einem Fluid, wie beispielsweise Öl, gefüllt sein kann. Ferner weist das Gleitsegment (1) in Richtung der Achse (4) eine Profilierung (6) der Gleitschicht (8) auf, wobei es sich insbesondere um eine konvex gekrümmte Profilierung (6) handelt, die eine Erhöhung der Gleitfläche (2) um nur wenige Mikrometer (µm) bis zu wenigen 1/100 mm, besonders bevorzugt von 5 µm bis 200 µm bildet.

Die erfindungsgemäße Windkraftanlage mit mindestens einer zuvor beschriebenen Gleitlagerung und/oder einem Hauptrotorlager weist üblicherweise einen Rotor auf, der auf einem Turm angebracht ist und eine unterschiedliche Anzahl und Form von Rotorblättern aufweisen kann. Die Aufgabe des Rotors ist hierbei die kinetische Energie des Windes in Rotationsenergie umzuwandeln. Die Windkraftanlage umfasst daher in einem Aspekt einen Rotor, einen Turm und ein Getriebe, wobei der Rotor über eine Welle drehmomentübertragend mit dem Getriebe verbunden ist, welches mindestens eine zuvor beschriebene Gleitlagerung mit mehreren radial angeordneten Gleitsegmenten, wie zuvor beschrieben aufweist oder ein zuvor beschriebenes Hauptrotorlager aufweist. Das Getriebe ist wiederum mit einem Leistungserzeuger verbunden ist. Bei dem Leistungserzeuger kann es sich um jede technische Einrichtung handeln, die mechanische, chemische, thermische oder elektromagnetische Energie direkt in elektrische Energie umwandelt und umgekehrt. Da die hiesige Erfindung vorzugsweise auf die Anwendung innerhalb von Windkraftanlagen konzipiert ist, bezeichnet der Leistungserzeuger in diesem Fall vorzugsweise einen Generator, bei dem eine Energieübertragung von einer kinetischen Energie auf elektrische Energie erfolgt. Obwohl die Erfindung in Bezug auf Windkraftanlagen beschrieben wurde, soll Ihre Anwendung nicht auf solche beschränkt sein. Die hier dargestellten profilierten Geleitsegmente, Gleitlagerungen und Hauptrotorlager können auch in anderen Industrieapplikationen eingesetzt werden.

Diese und andere Ausführungsformen der vorliegenden Erfindung werden in der Beschreibung und den Beispielen offenbart und sind durch diese umfasst. Weitere Literatur über bekannte Materialien, Verfahren und Anwendungen die in Übereinstimmung mit der vorliegenden Erfindung verwendet werden können, können aus öffentlichen Bibliotheken und Datenbanken, beispielsweise unter Verwendung elektronischer Geräte aufgerufen werden. Ein vollständigeres Verständnis der Erfindung kann durch Bezugnahme auf die Figuren erhalten werden, die zum Zweck der Illustration bereitgestellt wurden und den Umfang der Erfindung nicht beschränken sollen.

### Bezugszeichenliste

1. Gleitsegment
2. Gleitfläche
3. Drehrichtung
4. Achsrichtung
5. Trägerstruktur
6. Profilierung
7. Gleitfläche der Welle
8. Gleitschicht
9. Druckverlauf des nicht profilierten Segments
10. Welle
11. Spaltweite und Hydrodynamischer Ölfilm zwischen Welle und Segment
12. Lagergehäuse
13. Federelement
21. Resultierende Spaltweite bei profiliertem Segment
22. Gleitfläche mit Profilierung
27. Verformung der Lauffläche der Welle
29. Druckverlauf bei profiliertem Gleitsegment
32. Verformung der Gleitfläche ohne Profilierung

## Patentansprüche

1. Gleitsegment (1), welches mit einem Lagergehäuse (12) verbunden werden kann, wobei das Gleitsegment (1) auf der zur Welle (10) gerichteten Seite eine Gleitschicht (8) aufweist die eine Gleitfläche (2) bildet, welche mit der Gleitfläche der Welle (7) interagiert, wobei ferner die Gleitschicht (8) eine Profilierung (6) in Richtung der Achse (4) aufweist.

2. Gleitsegment (1) nach Anspruch 1, wobei die Gleitfläche (2) des Gleitsegments (1) in Rotationsrichtung (3) der Welle (10) einen durch den Wellendurchmesser vorgegebenen Segmentdurchmesser aufweist.

3. Gleitsegment (1) nach Anspruch 1 oder 2, wobei es sich bei der der Profilierung (6) um eine einachsig konvex gekrümmte Oberfläche in Richtung der Welle (10) handelt.

4. Gleitsegment (1) nach einem der Ansprüche 1 bis 3, wobei die Profilierung (6) nur wenige Mikrometer (µm) bis zu wenigen 1/100 mm hoch ist.

5. Gleitsegment (1) nach einem der Ansprüche 1 bis 4, wobei die Profilierung (6) der Gleitschicht (8) des Gleitsegments (1) zur Bildung der Gleitschicht (2) eine Höhe im Bereich von 5 µm bis 200 µm aufweist.

6. Gleitsegment (1) nach einem der Ansprüche 1 bis 5, wobei die Gleitschicht (8) als Gleitmaterial einen faserverstärkten Kunststoff aufweist, vorzugsweise wobei die Gleitschicht (8) als Gleitmaterial ein faserverstärktes Poly-Ether-Ether-Keton umfasst.

7. Gleitsegment (1) nach einem der Ansprüche 1 bis 5, wobei ein Federelement (13) zwischen dem Gleitsegment (1) und einer Trägerstruktur (5) angebracht ist, welches durch ein Führungselement, das das Federelement (13) umschließt gehalten wird, wobei das Führungselement am Gleitsegment (1) und der Trägerstruktur (5) befestigt ist und vorzugsweise zwischen dem Federelement (13) und dem Führungselement ein Spalt angeordnet ist.

8. Radialgleitlager, welches mehrere Gleitsegmente (1) nach einem der Ansprüche 1 bis 6 innerhalb eines Lagergehäuses (12) aufweist, wobei ein jedes Gleitsegment (1) auf einer Seite über eine Trägerstruktur (5) mit dem Lagergehäuse (12) verbunden ist und auf der gegenüberliegenden Seite durch seine profilierte Gleitfläche (2) in Kontakt mit der Welle (10) steht, vorzugsweise wobei mehrere Gleitlagersegmente (1) kreisförmig um die Welle (10) angeordnet sind und wobei die Anzahl der umlaufenden Gleitsegmente (1), welche die Welle (10) umgeben, abhängig von ihrer eigenen Größe, ihres Durchmessers sowie der Größe der Welle (10) und/oder deren Durchmesser ist, vorzugsweise wobei die Gleitsegmente (1) symmetrisch um die Welle (10) angeordnet sind.

9. Radialgleitlager nach Anspruch 8, wobei die Gleitfläche (2) des mindestens einen Gleitsegments (1) und die Gleitfläche (7) der Welle (10) durch einen Zwischenraum (11) voneinander beabstandet sind und wobei vorzugsweise der Zwischenraum (11) mit einer Schmierflüssigkeit, vorzugsweise Öl, Fett und/oder einem Fluid, gefüllt ist.

10. Hauptrotorlager umfassend mindestens ein Gleitsegment nach einem der Ansprüche 1 bis 7 oder ein Radialgleitlager nach einem der Ansprüche 8 oder 9.

11. Windkraftanlage umfassend mindestens ein Gleitsegment nach einem der Ansprüche 1 bis 7, mindestens ein Radialgleitlager nach einem der Ansprüche 8 oder 9 oder ein Hauptrotorlagern nach Anspruch 10.
